# EUROPEAN PATENT APPLICATION

(11) **EP 4 826 821 A2**
(43) Date of publication of application: **21.10.2026**
(21) Application number: 26196994.3
(22) Date of filing: 06.08.2026
(51) Int. Cl.: H01M 10/0525, H01M 4/525, H01M 10/0567, H01M 10/0568, H01M 10/0569

(54) **SECONDARY BATTERY AND ELECTRIC DEVICE**

(30) Priority: 17.09.2025 CN 202511333217
(71) Applicant: Zhejiang CosMX Battery Co., Ltd, Jiaxing, Zhejiang 314312 (CN)
(72) Inventor: LIU, Qingsong, Jiaxing, Zhejiang (CN); ZHU, Hui, Jiaxing, Zhejiang (CN); LUO, Qibo, Jiaxing, Zhejiang (CN); SHAN, Jiongwei, Jiaxing, Zhejiang (CN); CHEN, Yao, Jiaxing, Zhejiang (CN)
(74) Representative: Bandpay & Greuter

(57) **Abstract**

The present invention relates to the technical field of batteries, and discloses a secondary battery and an electric device, the secondary battery comprises a positive electrode plate, a negative electrode plate, a separator and an electrolyte, wherein the positive electrode plate, the negative electrode plate, and the separator are laminated or wound to form a cell, the number of layers n of the cell satisfies: 50 ≤ n ≤ 80, and the thickness of the cell is 5-15 mm; the electrolyte comprises a solvent comprising a linear solvent having 5-6 carbon atoms, with the mass percentage of the linear solvent having 5-6 carbon atoms in the electrolyte being denoted as S3, where 5% ≤ S3 ≤ 70%; the positive electrode plate comprises a positive electrode current collector, and a positive electrode active layer coated on a surface of at least one side of the positive electrode current collector, the positive electrode active layer comprising a positive electrode active material; the positive electrode active material comprises a Ni element, with the mass percentage of the Ni element in the positive electrode active material being denoted as w, where 0.3 ≤ S3/w ≤ 1.5. The present invention can effectively inhibit the gas generation of battery and reduce the risk of thermal runaway by optimizing the combination of an electrolyte and a positive electrode active material in the lithium-ion battery.

## Description

### TECHNICAL FIELD

The present invention relates to the technical field of batteries, and in particular to a secondary battery and an electric device.

### BACKGROUND

Compared to lithium iron phosphate batteries, ternary lithium batteries have a higher energy density and a smaller volume, which can more effectively support the long-term power demand of the electric device, and have high-power charging and discharging capability, making it the most suitable power supply device for devices such as low-altitude aircraft and humanoid robots.

However, devices such as low-altitude aircraft and humanoid robots require high-power charging and discharging during operation, for example, they need to discharge at a rate of more than 10C. When they are subjected to high-power charging and discharging, due to the presence of internal resistance, the temperature rise of the battery is high, which may result in the surface temperature of the battery reaching 40°C-80°C. Moreover, such devices need to operate in hot summer, that is, batteries need to operate in a high temperature environment. The battery has a large temperature rise superimposed on the ambient temperature. In severe cases, the surface temperature of the battery can reach 80°C or higher, making the battery more prone to generating gas by-products. In severe cases, there will be thermal safety hazards such as explosion, causing serious safety problems.

### SUMMARY

In view of this, the present invention provides a secondary battery to solve the problem of thermal safety hazards caused by the generation of gas by-products easily occurring when a battery is operated under high-power charging and discharging and in a high temperature environment, thus reducing the generation of gas by-products and reducing the risk of thermal runaway.

In a first aspect, the present invention provides a secondary battery, comprising a positive electrode plate, a negative electrode plate, a separator and an electrolyte, wherein the positive electrode plate, the negative electrode plate and the separator are laminated or wound to form a cell, the positive electrode plate comprises a positive electrode current collector and a plurality of positive tabs extending from the positive electrode current collector, the negative electrode plate comprises a negative electrode current collector and a plurality of negative tabs extending from the negative electrode current collector; the number of layers n of the cell satisfies: 50 ≤ n ≤ 80, and the thickness of the cell is 5-15 mm;
the electrolyte comprises a solvent comprising a linear solvent having 5-6 carbon atoms, with the mass percentage of the linear solvent having 5-6 carbon atoms in the electrolyte being denoted as S3, where 5% ≤ S3 ≤ 70%;
the positive electrode plate further comprises a positive electrode active layer coated on a surface of at least one side of the positive electrode current collector, the positive electrode active layer comprising a positive electrode active material; the positive electrode active material comprises a Ni element, with the mass percentage of the Ni element in the positive electrode active material being denoted as w, where $0.3 \leq S 3 / w \leq 1.5 .$

For a laminated cell, the number of layers of the cell refers to the number of positive electrode plate or negative electrode plate. For a wound cell, the number of layers of the cell refers to the number of folds of positive electrode plate or negative electrode plate.

In an optional embodiment, 15% ≤ S3 ≤ 50%,
and/or, the positive electrode active material is LiNiₓCo_{y}Mn_{z}MₖO₂, in which 0.3 ≤ x ≤ 0.9, preferably 0.5 ≤ x ≤ 0.8, 0 ≤ y ≤ 1, 0 ≤ z ≤ 1, 0 ≤ k ≤ 0.05, x+y+z+k=1, and M is selected from one or more of Fe, Mg, Cu, Zn, Al, Ti, Sn, B, Ga, Cr, Sr, V, and Zr;
and/or, the linear solvent having 5-6 carbon atoms comprises one or more of diethyl carbonate (DEC), ethyl propyl carbonate, propyl propionate (PP), ethyl butyrate, methyl trimethylacetate, and ethyl isobutyrate;
and/or, 20% ≤ w ≤ 55%.

In an optional embodiment, the solvent further comprises a cyclic carbonate comprising at least one of ethylene carbonate (EC) and propylene carbonate (PC), with the content of ethylene carbonate (EC) being denoted as S1 and the content of propylene carbonate (PC) being denoted as S2, where $0.01 % \leq S 1 \leq 30 % ; 0.01 % \leq S 2 \leq 30 % ;$
and/or, 0.1 ≤ S1/S2 ≤ 10, preferably 0.15 ≤ S1/S2 ≤ 5;
and/or, 10% ≤ S1+S2 ≤ 40%, preferably 15% ≤ S1+S2 ≤ 35%.

In an optional embodiment, the electrolyte further comprises a first additive, with the mass percentage of the first additive in the electrolyte being denoted as S4, where 0.1% ≤ S4 ≤ 6%, preferably 0.5% ≤ S4 ≤ 5%; and the first additive comprises one or more of 1,3-propane sultone, prop-1-ene-1,3-sultone, ethylene sulfate, ethylene sulfite, and thiophene;
and/or, the electrolyte further comprises a second additive, with the mass percentage of the second additive in the electrolyte being denoted as S5, where 0.1% ≤ S5 ≤ 4%, preferably 0.5% ≤ S5 ≤ 3%; and the second additive comprises one or more of vinylene carbonate, vinyl ethylene carbonate, fluoroethylene carbonate, and difluoroethylene carbonate.

In an optional embodiment, the electrolyte further comprises a lithium salt comprising one or more of lithium hexafluorophosphate (LiPF6), lithium bis(fluorosulfonyl)imide (LiFSI), and lithium bis(trifluoromethanesulfonyl)imide (LiTFSI), with the mass percentage of the lithium salt in the electrolyte being denoted as S6, where 8% ≤ S6 ≤ 20%, preferably 10% ≤ S6 ≤ 18%.

In an optional embodiment, the separator comprises a base film and an adhesive layer, with the coverage rate of the adhesive layer on the separator being denoted as m, where 20% ≤ m ≤ 100%, preferably 0.05 ≤ S6/m ≤ 1;
and/or, the porosity of the separator is controlled within 30%-50%.

In an optional embodiment, the doping element in the positive electrode active material comprises an Al element, preferably Al and Ti, the doping amount of the doping elements in the positive electrode active material is 1% or less, preferably the doping amount of the Al element in the positive electrode active material is 500-3000 ppm;
and/or, the positive electrode active material is a single crystal material.

In an optional embodiment, the positive electrode active material has an average particle size of 3-7 µm and a particle size distribution of: 1≤ Dv10 ≤ 3, 4≤ Dv50 ≤6, and 8 ≤ Dv90 ≤ 15;
and/or, the thickness of the positive electrode active layer on one side of the positive electrode plate is h1 µm, where 55 ≤ h1 ≤ 75.

In an optional embodiment, the negative electrode plate comprises a negative electrode current collector, and a negative electrode active layer coated on a surface of at least one side of the negative electrode current collector, the negative electrode active layer comprising a negative electrode active material;
the negative electrode active material has an average particle size of 4-8 µm and a particle size distribution of: 2≤ D10 ≤ 4, 4≤ D50 ≤8, and 9 ≤ D90 ≤ 15; and/or, the thickness of the negative electrode active layer on one side of the negative electrode plate is h2 µm, where 60 ≤ h2 ≤ 80;
preferably 1 ≤ h2/h1 ≤ 1.2.

In a second aspect, the present invention provides an electric device comprising the secondary battery as described above.

### Beneficial effects:

The secondary battery provided by the present invention comprises a positive electrode plate, a negative electrode plate, a separator and an electrolyte, wherein the positive electrode plate, the negative electrode plate and the separator are laminated or wound to form a cell, the positive electrode plate comprises a positive electrode current collector and a plurality of positive tabs extending from the positive electrode current collector, the negative electrode plate comprises a negative electrode current collector and a plurality of negative tabs extending from the negative electrode current collector; the number of layers n of the cell satisfies: 50 ≤ n ≤ 80, and the thickness of the cell is 5-15 mm. The solvent of the electrolyte comprises a linear solvent having 5-6 carbon atoms with a mass percentage of S3, the positive electrode active material comprises a Ni element with a mass percentage of w, which are controlled to satisfy 5% ≤ S3 ≤ 70% and 0.3 ≤ S3/w ≤ 1.5. According to the present invention, the cell has a multi-tab structure, and the number of tabs is indirectly represented by the number of layers of cell; the plurality of tabs are arranged to effectively meet the high-rate charging and discharging; and the number of layers and thickness of the cell are controlled within a proper range, so that the cell can be effectively prevented from excessively high temperature rise while meeting the high-rate charging and discharging, and the safety performance is improved. Meanwhile, the content of C atom in the linear solvent having 5-6 carbon atoms is higher, the molecular volume of the solvent is larger, the molecule is fairly stable, and the Brownian motion is relatively small. The solvent has a relatively high boiling point and is not easily oxidized to generate gas. Moreover, due to the larger molecular volume of the solvent, it is difficult to form a solvation structure with lithium ions, and when lithium ions are de-intercalated or intercalated from the active sites of positive electrode, these solvents do not migrate to the active sites of positive electrode along with lithium ions and are thus not oxidized at the positive electrode. In addition, the molecule of the linear solvent having 5-6 carbon atoms itself has a good oxidation stability, when the molecule is adsorbed at the active sites on the positive electrode surface, such as the Ni atoms exposed on the positive electrode surface, the molecule is not oxidized and prevents other molecules (e.g. the EC molecule in the electrolyte) from reacting at the active sites. Based on this, when w is greater, the Ni content in the positive electrode becomes higher, and more active sites are exposed, which makes it easier to oxidize the electrolyte. When S3 is smaller, fewer Ni active sites are covered by the solvent, causing oxidation of other components. Therefore, by comprehensively adjusting the mass percentage S3 of the linear solvent having 5-6 carbon atoms in the electrolyte and the mass percentage w of the Ni element in the positive electrode active material to satisfy 5% ≤ S3 ≤ 70% and 0.3 ≤ S3/w ≤ 1.5, the gas generation of the battery can be effectively inhibited and the expansion of the battery can be reduced. Through the mutual cooperation of the structure of the cell, the positive electrode active material and the solvent components in the electrolyte, the high-rate charging and discharging can be realized, and the temperature rise can be effectively controlled, the side reactions and gas generation can be reduced, and the safety performance can be comprehensively improved.

### DETAILED DESCRIPTION OF EMBODIMENTS

In order to make the objects, technical solutions and advantages of the present invention clearer, the technical solutions in the examples of the present invention will be clearly and completely described below with respect to the embodiments of the present invention. Apparently, the described embodiments are some, rather than all, of the embodiments of the present invention. Based on the embodiments in the present invention, all other embodiments obtained by those of ordinary skill in the art without involving creative effort fall within the scope of protection of the present invention.

The embodiments of the present invention are described below in conjunction with the following solutions.

According to an embodiment of the present invention, in a first aspect, there is provided a secondary battery, comprising a positive electrode plate, a negative electrode plate, a separator and an electrolyte, wherein the positive electrode plate, the negative electrode plate and the separator are laminated or wound to form a cell, the positive electrode plate comprises a positive electrode current collector and a plurality of positive tabs extending from the positive electrode current collector, the negative electrode plate comprises a negative electrode current collector and a plurality of negative tabs extending from the negative electrode current collector; the number of layers n of the cell satisfies: 50 ≤ n ≤ 80, and the thickness of the cell is 5-15 mm; the electrolyte comprises a solvent comprising a linear solvent having 5-6 carbon atoms, with the mass percentage of the linear solvent having 5-6 carbon atoms in the electrolyte being denoted as S3, where 5% ≤ S3 ≤ 70%; the positive electrode plate comprises a positive electrode current collector, and a positive electrode active layer coated on a surface of at least one side of the positive electrode current collector, the positive electrode active layer comprising a positive electrode active material; the positive electrode active material comprises a Ni element, with the mass percentage of the Ni element in the positive electrode active material being denoted as w, where 0.3 ≤ S3/w ≤ 1.5.

For the secondary battery provided by the present invention, the positive electrode plate, the negative electrode plate and the separator are laminated or wound to form a cell, the positive electrode plate comprises a positive electrode current collector and a plurality of positive tabs extending from the positive electrode current collector, the negative electrode plate comprises a negative electrode current collector and a plurality of negative tabs extending from the negative electrode current collector; the number of layers n of the cell satisfies: 50 ≤ n ≤ 80, and the thickness of the cell is 5-15 mm. According to the present invention, the cell has a multi-tab structure, and the number of tabs is indirectly represented by the number of layers of cell; the plurality of tabs are arranged to effectively meet the high-rate charging and discharging; and the number of layers and thickness of the cell are controlled within a proper range, so that the cell can be effectively prevented from excessively high temperature rise while meeting the high-rate charging and discharging, and the safety performance is improved. In addition, the solvent of the electrolyte comprises a linear solvent having 5-6 carbon atoms with a mass percentage of S3, the positive electrode active material comprises a Ni element with a mass percentage of w, which are controlled to satisfy 5% ≤ S3 ≤ 70% and 0.3 ≤ S3/w ≤ 1.5. In the present invention, the content of C atom in the linear solvent having 5-6 carbon atoms is higher, the molecular volume of the solvent is larger, the molecule is fairly stable, and the Brownian motion is relatively small. The solvent has a relatively high boiling point and is not easily oxidized to generate gas. Moreover, due to the larger molecular volume of the solvent, it is difficult to form a solvation structure with lithium ions, and when lithium ions are de-intercalated or intercalated from the active sites of positive electrode, these solvents do not migrate to the active sites of positive electrode along with lithium ions and are thus not oxidized at the positive electrode. In addition, the molecule of the linear solvent having 5-6 carbon atoms itself has a good oxidation stability, when the molecule is adsorbed at the active sites on the positive electrode surface, such as the Ni atoms exposed on the positive electrode surface, the molecule is not oxidized and prevents other molecules (e.g., the EC molecule in the electrolyte) from reacting at the active sites. Therefore, when w is greater, the Ni content in the positive electrode becomes higher, and more active sites are exposed, which makes it easier to oxidize the electrolyte. As a result, more oxidation reactions occur, a larger amount of gas is generated, and the expansion rate of the battery becomes greater. When S3 is greater, the more active sites on the positive electrode surface can be covered by the linear solvent having 5-6 carbon atoms, and the more stable linear solvent molecule having 5-6 carbon atoms will not be oxidized, increasing the oxidation resistance of the electrolyte and generating less gas. However, the larger S3, the greater the impedance, the greater the temperature rise. In contrast, when S3 is smaller, fewer active sites on the positive electrode surface are covered by the linear solvent having 5-6 carbon atoms. As a result, more oxidation reactions occur, more gas is generated, and the expansion rate of the battery becomes greater. Therefore, by comprehensively adjusting the cell to have a multi-tab structure, the number of layers n of the cell and the thickness of the cell, the mass percentage S3 of the linear solvent having 5-6 carbon atoms in the electrolyte, and the mass percentage w of the Ni element in the positive electrode active material to satisfy 50 ≤ n ≤ 80, a cell thickness of 5-15 mm, 5% ≤ S3 ≤ 70%, and 0.3 ≤ S3/w ≤ 1.5, the gas generation of the battery can be effectively inhibited, and the increase of temperature rise and risk of thermal runaway can be reduced.

As an example, the number of layers n of the cell may be 50, 55, 60, 65, 70, 75, 80, or in a range of any two of the foregoing values, the thickness of the cell may be 5 mm, 7 mm, 9 mm, 11 mm, 13 mm, 15 mm, or in a range of any two of the foregoing values, the mass percentage S3 of the linear solvent having 5-6 carbon atoms in the electrolyte may be 5%, 10%, 20%, 30%, 40%, 50%, 60%, 70%, or in a range of any two of the foregoing values; and the value of S3/w may be 0.3, 0.5, 0.8, 1.0, 1.2, 1.5, or in a range of any two of the foregoing values.

Preferably 15% ≤ S3 ≤ 50%.

In an optional embodiment, the positive electrode active material is LiNiₓCo_{y}Mn_{z}MₖO₂, in which 0.3 ≤ x ≤ 0.9, preferably 0.5 ≤ x ≤ 0.8, 0 ≤ y ≤ 1, 0 ≤ z ≤ 1, 0 ≤ k ≤ 0.05, and x+y+z+k=1.

Preferably, M is selected from one or more of Fe, Mg, Cu, Zn, Al, Ti, Sn, B, Ga, Cr, Sr, V, and Zr.

In an optional embodiment, the linear solvent having 5-6 carbon atoms comprises one or more of diethyl carbonate (DEC), ethyl propyl carbonate, propyl propionate (PP), ethyl butyrate, methyl trimethylacetate, and ethyl isobutyrate. The specific molecular structures are as follows:

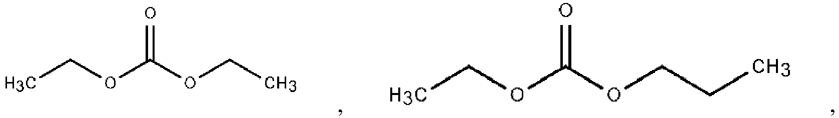

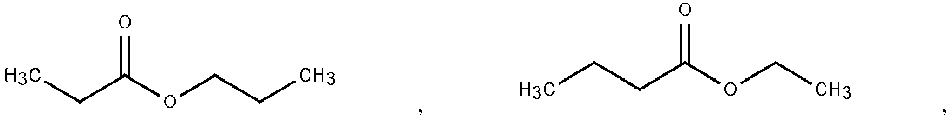

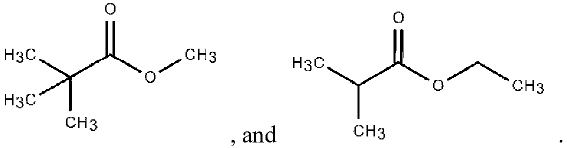

In an optional embodiment, 20% ≤ w ≤ 55%. As an example, the mass percentage w of the Ni element in the positive electrode active material may be 20%, 30%, 40%, 50%, 55%, or in a range of any two of the foregoing values.

In an optional embodiment, the solvent of the electrolyte further comprises a cyclic carbonate comprising at least one of ethylene carbonate (EC) and propylene carbonate (PC); with the content of ethylene carbonate (EC) being denoted as S1, where 0.01% ≤ S1 ≤ 30%, the content of propylene carbonate (PC) being denoted as S2, where 0.01% ≤ S2 ≤ 30%; 10% ≤ S1+S2 ≤ 40%, preferably 15% ≤ S1+S2 ≤ 35%; 0.1 ≤ S1/S2 ≤ 10, preferably 0.15 ≤ S1/S2 ≤ 5.

Specifically, the cyclic carbonate in the present invention has a higher dielectric constant, and can effectively dissociate the lithium salt when the content of the cyclic carbonate is controlled within this range. This can be attributed to the fact that the carbon-oxygen p orbit of the cyclic carbonate has a pair of electrons that can donate into the s orbit of lithium ions to form a coordination bond, making it easier to form a solvation structure with lithium ions in the electrolyte. Specifically, the solvent in the electrolyte of the present invention comprises a cyclic solvent and a linear solvent, wherein the cyclic solvent usually has a higher dielectric constant to dissociate the lithium salt, and the linear solvent has a smaller viscosity, making it to have a good fluidity, thereby allowing fast transport of lithium ions. Therefore, in the electrolyte, when the content of the cyclic carbonate is increased, the viscosity is increased, which consequently affects the compatibility and leads to an increase in impedance. As a result, the temperature rise is increased, and severe lithium plating tends to occur on the negative electrode, which affects the cycling performance. If the content of the cyclic carbonate is too low, the dissociation for the lithium salt cannot be achieved, and lithium dendrites are more prone to form, affecting the cycling performance. In summary, the present invention comprehensively controls the total amount of cyclic carbonate, that is, 10% ≤ S1+S2 ≤ 40%, preferably 15% ≤ S1+S2 ≤ 35%. The balance between safety performance and cycling performance can be achieved.

As an example, S1+S2 may be set to 10%, 15%, 20%, 25%, 30%, 35%, 50%, or in a range of any two of the foregoing values.

In an optional embodiment, among the two types of cyclic carbonates, EC is more prone to be oxidized at the positive electrode, because EC is coordinated with Li⁺ to form a solvation structure, which will migrate to the active sites on the positive electrode surface along with Li⁺, so that EC contacts with the positive electrode surface, and H on two methylene groups is oxidized by TM-O² on the positive electrode surface, resulting in EC decomposition. However, propylene carbonate (PC) has a molecular structure in which -CH₃ replaces H in EC, so that when PC comes into contact with the positive electrode surface, TM-O²- on the positive electrode surface cannot come into contact with H on methylene groups due to the large steric hindrance of -CH₃. Therefore, PC cannot be oxidized and thus decomposed. As a result, ethylene carbonate (EC) has poor oxidation stability than PC and is easily oxidized to generate gas at the positive electrode. Similarly, EC is more prone to undergo a reduction reaction at the negative electrode than PC. After the reduction at the negative electrode, EC generates organic matter to form a solid electrolyte interface SEI covering the negative electrode, which protects the negative electrode and prevents other solvents from reducing and decomposing. However, PC cannot be reduced and decomposed to form an SEI layer on the negative electrode. When lithium ions migrate to the negative electrode surface along with PC, the interface protection for the negative electrode is not good enough, PC will be intercalated into the graphite negative electrode together with lithium ions, which will increase the spacing between graphite particle layers of the negative electrode and destroy the structure of the negative electrode. Thus, when the S1/S2 value is greater, there is more EC, which provides better protection for the negative electrode and results in a better capacity retention rate of the battery at room temperature. However, the battery is more prone to generate gas at a high temperature. Conversely, when S1/S2 is smaller, there is a higher PC content. In this case, the electrolyte is less prone to oxidize at the positive electrode, and the battery is less likely to generate gas at high temperature. However, the protection for the negative electrode is insufficient, and PC tends to be intercalated into the graphite negative electrode, resulting in capacity attenuation of the battery. The present invention effectively achieves a balance between the high-temperature safety performance and cycling performance of the battery system by strictly controlling the amounts of EC and PC, and specifically satisfying 0.01% ≤ S1 ≤ 30%, 0.01% ≤ S2 ≤ 30%, and 0.1 ≤ S1/S2 ≤ 10. Preferably 0.15 ≤ S1/S2 ≤ 5.

As an example, the content S1 of the ethylene carbonate may be set to 0.01%, 0.1%, 0.5%, 1%, 5%, 10%, 15%, 20%, 25%, 30%, or in a range of any two of the foregoing values; the content S2 of the propylene carbonate may be set to 0.01%, 0.1%, 0.5%, 1%, 5%, 10%, 15%, 20%, 25%, 30%, or in a range of any two of the foregoing values; and S1/S2 may be set to 0.1, 0.15, 0.2, 0.5, 1, 1.5, 2, 3, 4, 5, 6, 7, 8, 9, 10, or in a range of any two of the foregoing values.

In an optional embodiment, the electrolyte further comprises a first additive containing a S element in its structure, which oxidizes and forms an S-containing interfacial film at the positive electrode. Moreover, the S element will complex with metal elements on the positive electrode surface, reducing the oxidizing property of the positive electrode surface, thus reducing the oxidation of the positive electrode to the electrolyte and reducing gas generation, thereby reducing the expansion rate. When the content of the first additive is too small, the effect of reducing the oxidation of the electrolyte at the positive electrode cannot be achieved and the expansion rate is increased. When the content of the first additive is too large, the interface layer on the positive electrode surface is too thick, which will increase the battery impedance, decrease the dynamic performance of the battery, and increase the temperature rise of the battery. Thus, the mass percentage S4 of the first additive in the electrolyte can be controlled to satisfy 0.1% ≤ S4 ≤ 6%, preferably 0.5% ≤ S4 ≤ 5%. For example, the first additive comprises one or more of 1,3-propane sultone (PS), prop-1-ene-1,3-sultone (PST), ethylene sulfate (DTD), methylene methanesulfonate, ethylene sulfite, thiophene, etc.

As an example, the mass percentage S4 of the first additive in the electrolyte may be set to 0.1%, 0.5%, 1%, 2%, 3%, 4%, 5%, 6%, or in a range of any two of the foregoing values.

The content of the first additive should be adjusted in connection with the other components in the electrolyte, specifically, when S3 is larger and S1/S2 is smaller, the electrolyte itself has good oxidation resistance, and S4 can be reduced to balance the dynamic performance of the battery.

In an optional embodiment, the electrolyte further comprises a second additive, with the mass percentage of the second additive in the electrolyte being denoted as S5, where 0.1% ≤ S5 ≤ 4%, preferably 0.5% ≤ S5 ≤ 3%. For example, the second additive comprises one or more of vinylene carbonate, vinyl ethylene carbonate, fluoroethylene carbonate, difluoroethylene carbonate, etc.

The second additive of the present invention can undergo a reduction reaction at the negative electrode to form a stable SEI film, which can protect the negative electrode, prevent other solvents from reducing and decomposing or being intercalated into the negative electrode, and improve the cycling performance. When the content of the second additive is greater, the interface formed at the negative electrode is thick, which makes the battery impedance larger, the high-power charging and discharging performance of the battery decreases, and the temperature rise increases.

As an example, the mass percentage S5 of the second additive in the electrolyte may be set to 0.1%, 0.5%, 1%, 2%, 3%, 4%, or in a range of any two of the foregoing values.

In the present invention, when S1/S2 in the electrolyte is smaller, the content of PC in the electrolyte is larger, and the increase of S5 is beneficial to protect the negative electrode and prevent PC from being intercalated into the graphite negative electrode.

In an optional embodiment, the electrolyte further comprises a lithium salt comprising one or more of lithium hexafluorophosphate (LiPF6), lithium bis(fluorosulfonyl)imide (LiFSI), and lithium bis(trifluoromethanesulfonyl)imide (LiTFSI), with the mass percentage of the lithium salt in the electrolyte being denoted as S6, where 8% ≤ S6 ≤ 20%, preferably 10% ≤ S6 ≤ 18%.

LiPF6 in the present invention has a good stability and can passivate the positive electrode current collector to prevent it from being corroded, so LiPF6 is usually used as a main salt. In addition, LiFSI has a larger anion than LiPF6, resulting in higher conductivity, higher lithium-ion transference number, and better dynamic performance, when LiFSI is used in combination with LiPF6, the battery is allowed to have better dynamic performance.

As an example, the mass percentage S6 of the lithium salt in the electrolyte may be set to 8%, 10%, 12%, 14%, 16%, 18%, 20%, or in a range of any two of the foregoing values.

In an optional embodiment, the separator comprises a base film and an adhesive layer, with the coverage rate of the adhesive layer on the separator being denoted as m, where 20% ≤ m ≤ 100%, preferably 0.05 ≤ S6/m ≤ 1; and the porosity of the separator is controlled within 30%-50%.

When the coverage rate of the adhesive layer on the separator is too small, the bonding performance is poor, which affects the long cycling performance of the battery. When the coverage rate of the adhesive layer on the separator is greater, the electrode plates in the battery are better bonded, and the transport of lithium ions among the positive electrode, separator and the negative electrode is more stable, ensuring better long cycling performance of the battery. The coverage rate of the adhesive layer in the present invention is controlled within 20%-100%, achieving a better long cycling performance.

The bonding between separator and electrode plates is directly related to the concentration of lithium salt in electrolyte. When the content of the lithium salt in the electrolyte decreases, the better swelling of the adhesive layer on the separator surface and the better bonding between the separator and the electrode plates can be achieved. However, if the content of lithium salt is too low, the adhesive layer of the separator will be swollen excessively, causing detachment of the adhesive layer. When the content of the lithium salt in the electrolyte is too high, it is difficult to swell the adhesive layer of the separator, resulting in poor bonding between the separator and the electrode plates. This can be attributed to the fact that when the content of the lithium salt is too high, the electrolyte contains a large amount of lithium ions, which coordinate with solvents such as EC and PC in the electrolyte, resulting in less free PC and EC. In such case that the free solvents are reduced, the small molecules entering the adhesive layer of the separator are reduced, which makes it difficult to swell the adhesive layer molecule of the separator. Specifically, when the S6/m value is greater, the content of lithium salt is higher and the coverage rate of the adhesive layer is lower, which makes it more difficult to swell the separator, resulting in poor bonding of the separator. Conversely, when the S6/m value is smaller, the better bonding is achieved. However, if the S6/m value is too small, the content of lithium salt is too low, and the coverage rate of the adhesive layer is too high, such that a large amount of solvent molecules will enter the adhesive layer, which will lead to excessive swelling of the adhesive layer, resulting in detachment of the adhesive layer and failure of the battery. According to the present invention, by comprehensively controlling the content of the lithium salt and the coverage rate of the adhesive layer to satisfy 0.05 ≤ S6/m ≤ 1, the better bonding between the separator and the electrode plates can be achieved, thus realizing better electrochemical performance.

When the porosity of the separator is larger, the battery has better high-power charging and discharging capability, but if the porosity is too large, the thermal shrinkage of the separator will greatly affect the safety performance of the battery. The separator of the present invention has a porosity controlled within 30%-50%, and thus has a better ability to transport lithium ions, which enables lithium ions to rapidly pass through the separator and reduces the transport impedance in the separator.

As an example, the porosity of the separator may be set to 20%, 30%, 40%, 50%, 60%, 70%, 80%, 90%, 100%, or in a range of any two of the foregoing values; and S6/m may be set to 0.05, 0.1, 0.2, 0.3, 0.4, 0.5, 0.6, 0.7, 0.8, 0.9, 1, or in a range of any two of the foregoing values.

Method for detecting coverage rate of adhesive layer: A scanning electron microscope (SEM) is used to observe the surface of the separator, the images taken are processed by an image analysis software and the percentage of the area covered by the coating to the total area is accurately calculated.

Method for detecting porosity of separator: The porosity of the separator is determined by a gas (e.g., helium) pycnometry method. Specifically, the skeletal volume and the geometric volume of the separator are measured and the porosity is calculated as the ratio of the difference between the geometric volume and the skeletal volume to the geometric volume.

In order to improve the high-power charging and discharging performance and safety performance of the battery, the positive electrode active material used is a ternary material. By controlling the morphology of the positive electrode, doping elements, particle size and the thickness of the positive electrode active layer, the battery is allowed to have good high-power charging and discharging performance and high-temperature performance.

In an optional embodiment, the doping element in the positive electrode active material comprises an Al element, preferably Al and Ti, the doping amount of the doping elements in the positive electrode active material is 1% or less, preferably the doping amount of the Al element in the positive electrode active material is 500-3000 ppm.

In the present invention, Al can stabilize the positive electrode structure, prevent serious phase change and oxygen evolution of the positive electrode, and doping Al can effectively reduce the oxidation of the electrolyte and reduce expansion. By doping a Ti element in the positive electrode, it is possible to form a fast ionic conductor at the interface. Through the formation of Li-Ti-O electrostatic interaction, the solvation energy of lithium ions is reduced, the rapid transport of lithium ions at the interface is realized, and the fast-charge cycling performance is improved.

As an example, the doping amount of the doping element in the positive electrode active material is 0.05%, 0.1%, 0.2%, 0.3%, 0.4%, 0.5%, 0.6%, 0.7%, 0.8%, 0.9%, 1%, or in a range of any two of the foregoing values, and the doping amount of the Al element in the positive electrode active material is 500 ppm, 800 ppm, 1000 ppm, 1500 ppm, 2000 ppm, 2500 ppm, 3000 ppm, or in a range of any two of the foregoing values.

Method for detecting doping amount of doping element: The surface of the positive electrode plate is scanned by an X-ray energy spectrometer to determine the mass content distribution of various elements.

In an optional embodiment, the positive electrode active material is a single crystal material. Because the surface active sites of single crystal are less than those of polycrystalline, the oxidation of electrolyte is reduced.

In an optional embodiment, the positive electrode active material has an average particle size of 3-7 µm and a particle size distribution of: 1 ≤ Dv10 ≤ 3, 4≤ Dv50 ≤6, and 8 ≤ Dv90 ≤ 15; and the thickness of the positive electrode active layer on one side of the positive electrode plate is h1 µm, where 55 ≤ h1 ≤ 75.

In the present invention, by adjusting the average particle size and particle size distribution of the positive electrode active material, the rapid transport of lithium ions in the positive electrode can be accelerated, so that the transport distance of lithium ions within the ternary positive electrode particles is shorter, the diffusion impedance of lithium ions within the particles is reduced, and the temperature rise is decreased. However, if the particle size is too small, the active sites on the positive electrode active material that come into contact with the electrolyte are increased, gas generation and expansion rate are increased. Therefore, controlling the particle size of the positive electrode active material in the positive electrode plate can balance the temperature rise and expansion rate and achieve a better cycling performance. In addition, by controlling the thickness of the active material on one side of the positive electrode plate, the rapid transport of lithium ions in positive electrode particles can be achieved.

As an example, the average particle size of the positive electrode active material may be set to 3 µm, 4 µm, 5 µm, 6 µm, 7 µm, or in a range of any two of the foregoing values, the Dv10 of the positive electrode active material may be 1 µm, 1.5 µm, 2 µm, 2.5 µm, 3 µm, or in a range of any two of the foregoing values, the Dv50 of the positive electrode active material may be 4 µm, 4.5 µm, 5 µm, 5.5 µm, 6 µm, or in a range of any two of the foregoing values, the Dv90 of the positive electrode active material may be 8 µm, 9 µm, 10 µm, 11 µm, 12 µm, 13 µm, 14 µm, 15 µm, or in a range of any two of the foregoing values, and the thickness h1 of the positive electrode active layer on one side of the positive electrode plate may be 55 µm, 60 µm, 65 µm, 70 µm, 75 µm, or in a range of any two of the foregoing values.

In an optional embodiment, the negative electrode plate comprises a negative electrode current collector, and a negative electrode active layer coated on a surface of at least one side of the negative electrode current collector, the negative electrode active layer comprising a negative electrode active material.

The particle size of the negative electrode active material further affects the content of ethylene carbonate and the second additive in the electrolyte. When the particle size of the negative electrode active material is smaller, the specific surface area of the negative electrode is higher, and more active sites are exposed on the surface, the fast charging performance of the negative electrode is better, but the need for ethylene carbonate and the second additive in the electrolyte is more. When the active sites on the negative electrode surface is increased, more second additives or ethylene carbonate are required to form an SEI layer to protect the negative electrode, which increase the impedance and thus the temperature rise. In the present invention, the negative electrode active material has an average particle size of 4-8 µm and a particle size distribution of: 2≤ D10 ≤ 4, 4≤ D50 ≤8, and 9 ≤ D90 ≤ 15; and and/or, the thickness of the negative electrode active layer on one side of the negative electrode plate is h2 µm, where 60 ≤ h2 ≤ 80.

In order to match the movement rates of the lithium ions at the positive and negative electrodes, it is necessary to control the thicknesses of the positive and negative electrode active layers, which preferably satisfy 1 ≤ h2/h1 ≤ 1.2. In such case, the movement rates of lithium ions in the positive and negative electrode active layers are equivalent, and the transport kinetics can be matched between the positive and negative electrodes, so that lithium ions will not accumulate in the negative electrode or the positive electrode to cause serious concentration polarization. Moreover, in order to make lithium ions to be transported quickly from positive electrode to negative electrode or vice versa, it is necessary to control the separator so that lithium ions can be transported quickly in the separator.

As an example, the average particle size of the negative electrode active material may be set to 4 µm, 5 µm, 6 µm, 7 µm, 8 µm, or in a range of any two of the foregoing values, the Dv10 of the negative electrode active material may be 2 µm, 2.5 µm, 3 µm, 3.5 µm, 4 µm, or in a range of any two of the foregoing values, the Dv50 of the negative electrode active material may be 4 µm, 5 µm, 6 µm, 7 µm, 8 µm, or in a range of any two of the foregoing values, the Dv90 of the negative electrode active material may be 9 µm, 10 µm, 11 µm, 12 µm, 13 µm, 14 µm, 15 µm, or in a range of any two of the foregoing values, the thickness h2 of the negative electrode active layer on one side of the negative electrode plate may be 60 µm, 65 µm, 70 µm, 75 µm, 80 µm, or in a range of any two of the foregoing values, and h2/h1 may be 1, 1.1, 1.2, or in a range of any two of the foregoing values.

Method for determining average particle size of negative electrode active material or positive electrode active material: A scanning electron microscope is used to observe the negative electrode plate or the positive electrode plate, and 5 different regions are observed, respectively. 4-6 different particles are randomly taken from each region, for a total of 30 particles, to measure the average particle size thereof.

Method for detecting Dv10, Dv50, and Dv90 of negative electrode active material or positive electrode active material: A negative electrode active material or a positive electrode active material is selected and measured with a laser particle size analyzer to determine the values of particle size distribution Dv10, Dv50 and Dv90. The testing method refers to the Chinese national standard GB/T 19077-2016.

Method for detecting thickness of negative electrode active layer or positive electrode active layer: A scanning electron microscope is used to observe the cross section of the electrode plates, and the thickness of active material of the electrode plates at 10 different positions is measured, respectively, and then averaged.

### [Electrolyte]

The electrolyte of the present invention comprises an organic solvent, a lithium salt, and a functional additive.

Among them, other organic solvents comprise a cyclic carbonate and a linear solvent having 5-6 carbon atoms. Among them, the linear solvent having 5-6 carbon atoms comprises one or more of diethyl carbonate (DEC), ethyl propyl carbonate, propyl propionate (PP), ethyl butyrate, methyl trimethylacetate, and ethyl isobutyrate, and the cyclic carbonate comprises at least one of ethylene carbonate (EC) and propylene carbonate (PC).

The lithium salt comprises one or more of lithium hexafluorophosphate (LiPF6), lithium bis(fluorosulfonyl)imide (LiFSI), and lithium bis(trifluoromethanesulfonyl)imide (LiTFSI).

The functional additive comprises a first additive, a second additive, etc. The second additive comprises one or more of vinylene carbonate, vinyl ethylene carbonate, fluoroethylene carbonate, difluoroethylene carbonate, etc. The first additive comprises one or more of 1,3-propane sultone (PS), prop-1-ene-1,3-sultone (PST), ethylene sulfate (DTD), ethylene sulfite, thiophene, etc.

### [Separator]

The separator of the present invention is a water-based separator or an oil-based separator, which comprises at least a base film and an adhesive layer. The structure of the separator is characterized by an adhesive layer + a base film, an adhesive layer + a ceramic + a base film, an adhesive layer + a ceramic + a base film + an adhesive layer, and an adhesive layer + a ceramic + a base film + a ceramic + an adhesive layer.

The base film can be selected from base film materials commonly used in the art, including but not limited to one of polyethylene (PE), polypropylene (PP), PE and PP composite separators.

The ceramic comprises aluminum oxide (Al₂O₃), aluminum hydroxide, magnesium oxide, alumina, zirconia, titania, silica, etc. The thickness of the ceramic layer is controlled within 1-3 µm. By applying a ceramic layer on the separator, the shrinkage of the separator is effectively inhibited, and the short circuit caused by the contact between the positive and negative electrodes is prevented.

The adhesive layer is a conventional spraying-type adhesive layer, the commonly used adhesive layer can be selected from one or more of polyvinylidene fluoride, vinylidene fluoride-hexafluoropropylene copolymer, polyacrylic resin, polymethyl acrylate, butyl acrylate-acrylonitrile copolymer, polyacrylonitrile, ethylene-acrylic acid copolymer, polyethyl acrylate, or sodium carboxymethyl cellulose.

The separator of the present invention can be coated on one side or both sides by any one of coating processes such as gravure coating, transfer coating, impregnation coating, and spraying.

### [Positive electrode plate]

The positive electrode plate of the present invention comprises a positive electrode current collector, a positive electrode active material, a conductive agent, and a binder. The positive electrode plate comprises a positive electrode current collector and a positive electrode active layer provided on the surface of the positive electrode current collector, wherein the positive electrode active layer comprises 90%-99.8% of a positive electrode active material, 0.1%-5% of a conductive agent, and 0.1%-5% of a binder in percentages by mass.

The positive electrode current collector of the present invention is an aluminum foil, a carbon-coated aluminum foil, or a composite aluminum foil.

The type of the positive electrode active material is LiNiₓCo_{y}Mn_{z}MₖO₂, and the doping element M is selected from one or more of Fe, Mg, Cu, Zn, Al, Ti, Sn, B, Ga, Cr, Sr, V, and Zr, in which 0.3 ≤ x ≤ 0.9, preferably 0.5 ≤ x ≤ 0.8, 0 ≤ y ≤ 1, 0 ≤ z ≤ 1, 0 ≤ k ≤ 0.05, x+y+z+k=1; and the positive electrode active material is a single crystal material.

The conductive agent in the positive electrode plate is also not particularly limited in the present invention, and can be selected from conductive agents conventionally used in the art, including but not limited to one or more of acetylene black, conductive carbon black, Ketjen black, conductive graphite, carbon nanotubes, conductive carbon fibers, and graphene.

The binder in the positive electrode plate is also not particularly limited in the present invention, and can be selected from binders conventionally used in the art, including but not limited to one or more of polyvinylidene fluoride, polytetrafluoroethylene, sodium carboxymethyl cellulose, styrene-butadiene rubber, and polyethylene oxide.

### [Negative electrode plate]

The negative electrode plate of the present invention comprises a negative electrode current collector, a negative electrode active material, a conductive agent, and a binder. The negative electrode plate comprises a negative electrode current collector and a negative electrode active layer provided on the surface of the negative electrode current collector; in the negative electrode active layer, the negative electrode active material represents 90 wt%-98.5 wt% of the total mass of the negative electrode active layer, the conductive agent represents 0.1 wt%-5 wt% of the total mass of the negative electrode active layer, and the binder represents for 0.1 wt%-5 wt% of the total mass of the negative electrode active layer.

For the battery according to the present invention, the negative electrode active material comprises at least one of graphite, a silicon-based material, etc.

For the battery according to the present invention, the conductive agent is selected from at least one of acetylene black, conductive carbon black, Ketjen black, conductive graphite, carbon nanotubes, conductive carbon fibers, and graphene.

For the battery according to the present invention, the binder is selected from at least one of polytetrafluoroethylene, sodium carboxymethyl cellulose, styrene-butadiene rubber, and polyethylene oxide.

The types of the conductive agent and binder in the negative electrode plate are also not particularly limited in the present invention, and for their selection range, reference can be made to the types of the conductive agent and binder in the positive electrode plate, which will not be described here again.

### [Battery]

The battery is a soft pack battery, in which the cell is wrapped with an aluminum plastic film. The ratio between the sealing width of the aluminum plastic film and the thickness of the cell is 0.3-0.8, the side-sealing of the cell is processed with a double-folding technique, and the sealing width of the adhesive is proportional to the thickness of the cell. In addition, a high temperature adhesive is applied to the side edge, and the entire adhesive is arc-shaped to constrain the expansion of the edge.

Preferably, the cell has a laminated structure or a multi-tab wound structure, the number of laminated or wound layers is 50-80, and the thickness is 6-14 mm. Specifically, the dimension of thickness * width * height is 6-14 mm * 148-152 mm * 202-210 mm.

In order to meet the high-current charging and discharge capacity of the cell, the load current I is unchanged, the number of wound layers of the cell is n, the current of the soft tab is expressed as i=I/n. The lower the number of wound layers of the cell, the higher the current of the single soft tab. Therefore, if the number of wound layers of the cell is too small, the temperature rise is too high, affecting the safety performance of the cell. However, if the number of layers is too large, the process yield is decreased and the process cost is increased. If the thickness of cell is too small, the cell capacity and energy density is damaged, and the number of wound layers is limited, which is the same as described in the case "the lower the number of wound layers of the cell". If the thickness is too large, the heat dissipation capacity of the cell becomes poor, the internal temperature rise accumulates, and the cycling life of the cell is decreased. When the width-to-height ratio of the cell falls within this range, the electrolyte infiltration (aging) time and DCIR performance are improved. Under high-power operating conditions, the current spreading efficiency is enhanced, and the current density as well as the temperature rise uniformity across different areas of the cell are relatively favorable. However, if the width-to-height ratio is too large, the imbalances in stress and local temperature rise become significantly aggravated, leading to a decrease in overall performance of cell. Conversely, if the width-to-height ratio is too small, the cell capacity decreases.

The lithium ion battery provided by the present invention will be further described in detail below by way of specific examples.

Unless otherwise specified, the reagents, materials, and instruments used in the following examples are those conventional in the art. All of which are commercially available and the reagents involved can also be synthesized by conventional methods in the art.

According to an embodiment of the present invention, in another aspect, the present invention further provides an electric device comprising the secondary battery as described above, the electric device is a low-altitude aircraft or a humanoid robot.

### Examples and comparative examples

### Example 1

A secondary battery, the specific preparation process of which was as follows:
1. Preparation of positive electrode plate: LiNi_{0.8}Co_{0.1}Mn_{0.1}O₂ powder, polyvinylidene fluoride, acetylene black, and carbon nanotubes were charged into a vacuum mixer in a mass ratio of 96:2:1.5:0.5, then N-methylpyrrolidone (NMP) was added thereto, and the mixture was thoroughly mixed in the vacuum mixer until a uniform, well-flowing positive electrode slurry was formed, wherein the solid content was 55 wt%. The above positive electrode slurry was uniformly coated onto a 12-µm-thick aluminum foil at a coating single-side areal density of 10 mg/cm². After drying and rolling, the thickness h1 of the positive electrode active layer on one side was controlled to 65 µm, followed by slitting and punching to obtain the positive electrode plate. The LiNi_{0.8}Co_{0.1}Mn_{0.1}O₂ powder was a single crystal powder, the LiNi_{0.8}Co_{0.1}Mn_{0.1}O₂ powder had an average particle size of 5.1 µm and a particle size distribution of: D10 of 2.8 µm, D50 of 5.13 µm, D90 of 9.3 µm, and the mass percentage w of the Ni element in the positive electrode active material was 48.3%.
2. Preparation of negative electrode plate: Graphite, styrene-butadiene rubber, sodium carboxymethyl cellulose, and acetylene black were charged into a vacuum mixer in a mass ratio of 96.5:1:1:1.5, then deionized water was added thereto, and the mixture was thoroughly mixed in the vacuum mixer to finally form a uniform, well-flowing negative electrode slurry, wherein the solid content was 45 wt%. The above negative electrode slurry was uniformly coated onto a 6-µm-thick carbon-coated copper foil at a coating single-side areal density of 5 mg/cm². After drying and rolling, the thickness of the negative electrode active material on one side was controlled to 70 µm, followed by die-cutting to obtain the negative electrode plate. Graphite had an average particle size of 6 µm and a particle size distribution of: D10 of 3.5 µm, D50 of 6.1 µm, and D90 of 10 µm.
3. Preparation of electrolyte: In an argon-filled glove box (H₂O < 0.1 ppm, O₂ < 0.1 ppm), ethylene carbonate (EC), propylene carbonate (PC), diethyl carbonate (DEC), and ethyl methyl carbonate (EMC) were uniformly mixed in a mass ratio of 2: 1: 3: 4, then fully dried lithium hexafluorophosphate (LiPF6) and lithium bis(fluorosulfonyl)imide (LiFSI) were added thereto for stirring and dissolving, with the mass of LiPF6 and LiFSI added being 3% and 12% based on the total mass of the electrolyte, then 1% of a second additive vinylene carbonate (VC), 3% of a first additive 1,3-propane sultone, and 0.5% of lithium difluorophosphate (LiPO₂F₂) were added, based on the total mass of the electrolyte, the mixture was uniformly stirred, and after passing the tests for moisture and free acid, the desired electrolyte was obtained.
4. Preparation of separator containing adhesive layer: The composition of the separator of the present invention was as follows: an adhesive layer + ceramic + a base film + an adhesive layer, in which the base film was 7 µm PP polymer, 2 µm ceramic was coated on one side of the base film, 1 µm PVDF adhesive layer was coated on the surface of ceramic and on the other side of the base film, respectively. The coverage rate m of the adhesive layer on the separator was 60%, and the porosity of the separator was 40%.
5. Preparation of lithium-ion battery: The above positive electrode plate, negative electrode plate and separator were wound to obtain a bare cell, wherein the number of layers n of the cell was 65 and the thickness of the cell was about 12 mm. The positive electrode plate comprised a plurality of positive tabs extending from a positive electrode current collector, the negative electrode plate comprised a plurality of negative tabs extending from a negative electrode current collector, whereby a cell having a multi-tab structure is formed. The bare cell was welded with hard tabs. The cell was placed in a battery casing and the above electrolyte was injected into the dried and qualified cell, and after processes such as leaving to stand, aging, formation, secondary sealing, aging, and sorting, the battery was obtained.

### Examples 2-4

The difference from Example 1 was that the positive electrode active material was different. The specific settings are as shown in Table 1 below.

**Table 1**

| | Positive electrode active material | w | S3/w |
|---|---|---|---|
| Example 2 | LiNi_{0.5}Co_{0.2}Mn_{0.3}O₂ | 30% | 0.81 |
| Example 3 | LiNi_{0.92}Co_{0.04}Mn_{0.04}O₂ | 55% | 0.44 |
| Example 4 | LiNi_{0.33}Co_{0.33}Mn_{0.33}O₂ | 20% | 1.21 |

The rest of the conditions were the same as those in Example 1.

### Example 5

A secondary battery, the specific preparation process of which was as follows:
1. Preparation of positive electrode plate: LiNi_{0.6}Co_{0.1}Mn_{0.294}Al_{0.003}Ti_{0.003}O₂ powder, polyvinylidene fluoride, acetylene black, and carbon nanotubes were charged into a vacuum mixer in a mass ratio of 96:2:1.5:0.5, then N-methylpyrrolidone (NMP) was added thereto, and the mixture was thoroughly mixed in the vacuum mixer until a uniform, well-flowing positive electrode slurry was formed, wherein the solid content was 55 wt%. The above positive electrode slurry was uniformly coated onto a 12-µm-thick aluminum foil at a coating single-side areal density of 10 mg/cm². After drying and rolling, the thickness h1 of the positive electrode active layer on one side was controlled to 65 µm, followed by slitting and punching to obtain the positive electrode plate. The LiNi_{0.6}Co_{0.1}Mn_{0.394}Al_{0.003}Ti_{0.003}O₂ powder was a single crystal powder, the LiNi_{0.6}Co_{0.1}Mn_{0.394}Al_{0.003}Ti_{0.003}O₂ powder had an average particle size of 5.1 µm and a particle size distribution of: D10 of 2.8 µm, D50 of 5.13 µm, D90 of 9.3 µm, the mass percentage w of the Ni element in the positive electrode active material was 37%, and the doping amount of the Al doping element in the positive electrode active material was 800 ppm.
2. Preparation of negative electrode plate: Graphite, styrene-butadiene rubber, sodium carboxymethyl cellulose, and acetylene black were charged into a vacuum mixer in a mass ratio of 96.5:1:1:1.5, then deionized water was added thereto, and the mixture was thoroughly mixed in the vacuum mixer to finally form a uniform, well-flowing negative electrode slurry, wherein the solid content was 45 wt%. The above negative electrode slurry was uniformly coated onto a 6-µm-thick carbon-coated copper foil at a coating single-side areal density of 5 mg/cm². After drying and rolling, the thickness of the negative electrode active material on one side was controlled to 70 µm, followed by die-cutting to obtain the negative electrode plate. Graphite had an average particle size of 6 µm and a particle size distribution of: D10 of 3.5 µm, D50 of 6.1 µm, and D90 of 10 µm.
3. Preparation of electrolyte: In an argon-filled glove box (H₂O < 0.1 ppm, O₂ < 0.1 ppm), ethylene carbonate (EC), propylene carbonate (PC), diethyl carbonate (DEC), and ethyl methyl carbonate (EMC) were uniformly mixed in a mass ratio of 2: 1: 3: 4, then fully dried lithium hexafluorophosphate (LiPF6) and lithium bis(fluorosulfonyl)imide (LiFSI) were added thereto for stirring and dissolving, with the mass of LiPF6 and LiFSI added being 3% and 12% based on the total mass of the electrolyte, then 1% of a second additive vinylene carbonate (VC), 3% of a first additive 1,3-propane sultone, and 0.5% of lithium difluorophosphate (LiPO₂F₂) were added, based on the total mass of the electrolyte, the mixture was uniformly stirred, and after passing the tests for moisture and free acid, the desired electrolyte was obtained.
4. Preparation of separator containing adhesive layer: The composition of the separator of the present invention was as follows: an adhesive layer + a ceramic + a base film + an adhesive layer, in which the base film was 7 µm PP polymer, 2 µm ceramic was coated on one side of the base film, 1 µm PVDF adhesive layer was coated on the surface of ceramic and on the other side of the base film, respectively. The coverage rate m of the adhesive layer on the separator was 60%, and the porosity of the separator was 40%.
5. Preparation of lithium-ion battery: The above positive electrode plate, negative electrode plate and separator were wound to obtain a bare cell. The bare cell was welded with hard tabs and then placed in a battery casing and the above electrolyte was injected into the dried and qualified cell, and after processes such as leaving to stand, aging, formation, secondary sealing, aging, and sorting, the battery was obtained.

### Examples 6-12

The difference from Example 5 was that the composition of the positive electrode active material was different. The specific settings are as shown in Table 2 below.

**Table 2**

| | Positive electrode active material | w | Doping element M | Doping amount of Al |
|---|---|---|---|---|
| Example 6 | LiNi_{0.6}Co_{0.1}Mn_{0.294}Al_{0.006}O₂ | 37% | Al | 1700 ppm |
| Example 7 | LiNi_{0.6}Co_{0.1}Mn_{0.29}Al_{0.01}O₂ | 37% | Al | 2800 ppm |
| Example 8 | LiNi_{0.6}Co_{0.1}Mn_{0.25}Al_{0.05}O₂ | 37% | Al | 14200 ppm |
| Example 9 | LiNi_{0.6}Co_{0.1}Mn_{0.25}Al_{0.01}Ti_{0.04}O₂ | 37% | Al+Ti | 2800 ppm |
| Example 10 | LiNi_{0.6}Co_{0.1}Mn_{0.25}Al_{0.01}Mg_{0.04}O₂ | 37% | Al+Mg | 2800 ppm |
| Example 11 | LiNi_{0.92}Co_{0.077}Mn_{0.077}Al_{0.003}Ti_{0.003}O₂ | 55% | Al+Ti | 800 ppm |
| Example 12 | LiNi_{0.33}Co_{0.332}Mn_{0.332}Al_{0.003}Mg_{0.003}O₂ | 20% | Al+Ti | 800 ppm |

The rest of the conditions were the same as those in Example 5.

### Examples 13-17

The differences from Example 5 were that the content S3 of the linear solvent having 5-6 carbon atoms was different, the content of ethyl methyl carbonate (EMC) was correspondingly adjusted to make the total amount sum up to 100%, and the composition of the positive electrode active material was changed so that S3/w was within the scope of the present invention. The specific settings are as shown in Table 3 below.

**Table 3**

| | Positive electrode active material | w | S3 | S3/w |
|---|---|---|---|---|
| Example 13 | LiNi_{0.6}Co_{0.1}Mn_{0.294}Al_{0.003}Ti_{0.003}O₂ | 37% | 16.10% | 0.44 |
| Example 14 | LiNi_{0.6}Co_{0.1}Mn_{0.294}Al_{0.003}Ti_{0.003}O₂ | 37% | 48.30% | 1.32 |
| Example 15 | LiNi_{0.4}Co_{0.297}Mn_{0.297}Al_{0.003}Ti_{0.003}O₂ | 25% | 8.05% | 0.32 |
| Example 16 | LiNi_{0.63}Co_{0.182}Mn_{0.182}Al_{0.003}Tl_{0.003}O₂ | 38% | 56.35% | 1.48 |
| Example 17 | LiNi_{0.92}Co_{0.077}Mn_{0.077}Al_{0.003}Ti_{0.003}O₂ | 55% | 68.43% | 1.24 |

The rest of the conditions were the same as those in Example 5.

### Examples 18-21

The difference from Example 5 was that the particle sizes of the positive electrode active material and negative electrode active material were different. The specific settings are as shown in Table 4 below.

**Table 4**

| | | Average particle size | Dv10 | Dv50 | Dv90 | Thickness h1 | Thickness h2 |
|---|---|---|---|---|---|---|---|
| Example 18 | Positive electrode active material | 4.2 | 2.2 | 5.0 | 8.6 | 65 | 70 |
| Example 19 | | 6.1 | 3.5 | 6.9 | 15.2 | 65 | 70 |
| Example 20 | Negative electrode active material | 4.1 | 3.6 | 4.8 | 9.6 | 60 | 70 |
| Example 21 | | 8.3 | 4.4 | 8.9 | 15.3 | 70 | 70 |

The rest of the conditions were the same as those in Example 5.

### Examples 22-29

The differences from Example 5 were that the type and mass percentage S4 of the first additive, the type and mass percentage S5 of the second additive, and the type and mass percentage S6 of the lithium salt in the electrolyte were different, and the content of ethyl methyl carbonate (EMC) was correspondingly adjusted to make the total amount sum up to 100%. The specific settings are as shown in Table 5 below.

**Table 5**

| | | Type | Mass percentage |
|---|---|---|---|
| Example 22 | First additive | DTD | 0.50% |
| Example 23 | | Thiophene | 5% |
| Example 24 | Second additive | Vinyl ethylene carbonate | 0.50% |
| Example 25 | | Difluoroethylene carbonate | 3% |
| Example 26 | Lithium salt | Lithium hexafluorophosphate (LiPF6)-3% | 10% |
| | | Lithium bis(trifluoromethanesulfonyl)imide-7% | |
| Example 27 | | Lithium bis(fluorosulfonyl)imide (LiFSI)-12% | 18% |
| | | Lithium bis(trifluoromethanesulfonyl)imide-5% | |
| Example 28 | | Lithium hexafluorophosphate (LiPF6)-5% | 8% |
| | | Lithium bis(fluorosulfonyl)imide (LiFSI)-3% | |
| Example 29 | | Lithium hexafluorophosphate (LiPF6)-15% | 20% |
| | | Lithium bis(fluorosulfonyl)imide (LiFSI)-5% | |

The rest of the conditions were the same as those in Example 5.

### Example 30

The difference from Example 5 was that the type of the linear solvent having 5-6 carbon atoms was different, in which propyl propionate was used instead of diethyl carbonate (DEC), and the rest of the conditions were the same as those in Example 5.

### Examples 31-37

The differences from Example 5 were that the type and mass percentages of S1/S2 and S1+S2 of the cyclic carbonate in the electrolyte were different, and the content of ethyl methyl carbonate (EMC) was correspondingly adjusted to make the total amount sum up to 100%. The specific settings are as shown in Table 6 below.

**Table 6**

| | Type of cyclic carbonate | S1 | S2 | S1/S2 | S1+S2 |
|---|---|---|---|---|---|
| Example 31 | EC | 24.15% | 0.00% | / | 24.15% |
| Example 32 | PC | 0.00% | 24.15% | 0.00 | 24.15% |
| Example 33 | EC+PC | 0.01% | 30.00% | 0.0003 | 30.01% |
| Example 34 | EC+PC | 30.00% | 0.01% | 3000 | 30.01% |
| Example 35 | EC+PC | 15.00% | 3.00% | 5.00 | 18.00% |
| Example 36 | EC+PC | 1.50% | 10.00% | 0.15 | 11.50% |
| Example 37 | EC+PC | 15.00% | 25.00% | 0.60 | 40.00% |

The rest of the conditions were the same as those in Example 5.

### Examples 38-39

The differences from Example 5 were that the coverage rate m of the adhesive layer on the separator and the porosity of the separator were different, and S6/m was controlled to be within the range. The specific settings are as shown in Table 7 below.

**Table 7**

| | m | Porosity | S6/m |
|---|---|---|---|
| Example 39 | 20% | 30% | 0.75 |
| Example 40 | 60% | 50% | 0.25 |

The rest of the conditions were the same as those in Example 5.

### Examples 40-41

The differences from Example 5 were that the thickness of the positive electrode active layer on the positive electrode plate, the thickness of the negative electrode active layer on the negative electrode plate, the thickness of the cell, and the number of layers n of the cell were different. The specific settings are as shown in Table 8 below.

**Table 8**

| | Thickness h1 | Thickness h2 | Number of layers n of cell | Thickness of cell |
|---|---|---|---|---|
| Example 39 | 55 | 60 | 50 | 7.8 |
| Example 40 | 75 | 80 | 77 | 15.0 |

The rest of the conditions were the same as those in Example 5.

The prepared batteries of the examples and comparative examples were tested for electrochemical performance, and the specific test process is as follows:

### 1. Test for fast-charge cycling performance

Test for fast-charge cycling performance at high temperature at 45°C, the thickness d1 of the battery before cycling was measured using a vernier caliper. After capacity grading, the battery was charged to 4.35V at a constant current of 6C followed by a constant voltage, with a cut-off current of 0.05C. Then the battery was discharged to 2.5V at a constant current of 10C, and the initial discharge capacity was recorded. Such charge-discharge procedure was repeated for 1000 cycles, and the capacity retention rate after 1000 cycles was calculated, and the thickness d2 of the battery at this time was also recorded. The calculation formula is as follows: 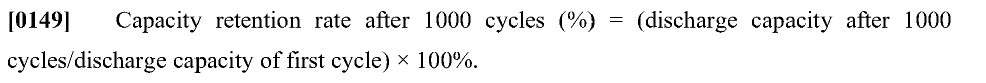
Capacity retention rate after 1000 cycles (%) = (discharge capacity after 1000 cycles/discharge capacity of first cycle) × 100%. 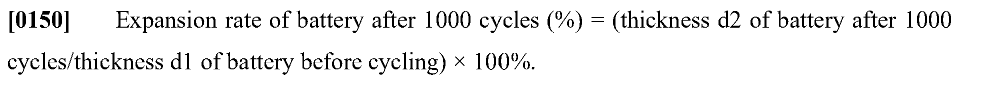
Expansion rate of battery after 1000 cycles (%) = (thickness d2 of battery after 1000 cycles/thickness d1 of battery before cycling) × 100%.

### 2. Test for temperature rise of battery

At 25°C, three temperature sensors were respectively placed at the center of the battery, the positive tab and the negative tab to monitor the real-time temperature. After capacity grading, the battery was charged to 3.65 V at a constant current of 1C followed by a constant voltage, with a cut-off current of 0.05C. Then the battery was discharged to 2.5 V at a constant current of 1C, and the initial discharge capacity was recorded as C0. The battery was discharged to 20% SOC at a rate of 1C, after leaving to stand for 4 h, the average temperature of the temperature sensors was recorded as T0. Then the battery was charged to 80% SOC at a rate of 6C, and the real-time maximum temperature during the charging process was recorded as T1. The temperature rise was calculated as T1-T0.

In conjunction with the table below, the test was conducted in several of the above groups, and the test results are shown in Tables 9 and 10 below.

**Table 9**

| | Temperature rise (T1-T0) of battery (°C) | Fast-charge cycling performance | |
|---|---|---|---|
| | | Capacity retention rate after 1000 cycles (%) | Expansion rate of battery after 1000 cycles (%) |
| Example 1 | 40.52 | 86.23% | 12.12% |
| Example 2 | 42.56 | 90.12% | 10.75% |
| Example 3 | 40.31 | 82.75% | 14.56% |
| Example 4 | 42.36 | 90.56% | 10.65% |
| Example 5 | 42.1 | 90.30% | 8.75% |
| Example 6 | 44.2 | 89.51% | 9.23% |
| Example 7 | 45.3 | 88.95% | 9.27% |
| Example 8 | 46.35 | 85.50% | 8.47% |
| Example 9 | 43.5 | 89.60% | 8.43% |
| Example 10 | 44.1 | 89.45% | 8.47% |
| Example 11 | 41.26 | 83.42% | 12.56% |
| Example 12 | 42.78 | 90.88% | 8.65% |
| Example 13 | 41.05 | 89.69% | 11.26% |
| Example 14 | 42.89 | 90.88% | 7.56% |
| Example 15 | 40.18 | 86.57% | 13.11% |
| Example 16 | 43.26 | 88.88% | 7.52% |
| Example 17 | 45.56 | 85.23% | 9.56% |
| Comparative Example 1 | 48.7 | 80.26% | 12.21% |
| Comparative Example 2 | 40.25 | 80.15% | 17.36% |

**Table 10**

| | Temperature rise (T1-T0) of battery (°C) | Fast-charge cycling performance | |
|---|---|---|---|
| | | Capacity retention rate after 1000 cycles (%) | Expansion rate of battery after 1000 cycles (%) |
| Example 18 | 40.16 | 87.56% | 10.24% |
| Example 19 | 46.85 | 89.36% | 8.21% |
| Example 20 | 45.76 | 88.75% | 8.56% |
| Example 21 | 46.55 | 87.98% | 8.78% |
| Example 22 | 40.23 | 88.75% | 12.31% |
| Example 23 | 43.56 | 88.96% | 8.56% |
| Example 24 | 41.26 | 86.98% | 9.86% |
| Example 25 | 43.85 | 89.68% | 8.75% |
| Example 26 | 40.4 | 86.75% | 8.75% |
| Example 27 | 42.89 | 88.79% | 8.89% |
| Example 28 | 40.35 | 83.56% | 9.26% |
| Example 29 | 43.86 | 87.56% | 8.75% |
| Example 30 | 40.87 | 88.21% | 10.21% |
| Example 31 | 42.16 | 83.75% | 13.14% |
| Example 32 | 42.99 | 83.16% | 8.94% |
| Example 33 | 43.25 | 83.87% | 8.23% |
| Example 34 | 43.36 | 83.55% | 13.00% |
| Example 35 | 40.16 | 86.59% | 10.21% |
| Example 36 | 40.19 | 85.31% | 10.31% |
| Example 37 | 42.35 | 87.89% | 8.75% |
| Example 38 | 40.88 | 85.69% | 12.58% |
| Example 39 | 41.23 | 87.56% | 10.58% |
| Example 40 | 36.5 | 91.30% | 8.65% |
| Example 41 | 48.1 | 89.30% | 9.15% |

Although the embodiments of the present invention have been described in connection with the summary, various modifications and variations may be made by those skilled in the art without departing from the spirit and scope of the present invention, and such modifications and variations fall within the scope defined by the appended claims.

## Claims

1. A secondary battery, comprising a positive electrode plate, a negative electrode plate, a separator and an electrolyte; wherein
the positive electrode plate, the negative electrode plate and the separator are laminated or wound to form a cell, the positive electrode plate comprises a positive electrode current collector and a plurality of positive tabs extending from the positive electrode current collector, the negative electrode plate comprises a negative electrode current collector and a plurality of negative tabs extending from the negative electrode current collector; the number of layers n of the cell satisfies: 50 ≤ n ≤ 80, and the thickness of the cell is 5-15 mm;
the electrolyte comprises a solvent comprising a linear solvent having 5-6 carbon atoms, with the mass percentage of the linear solvent having 5-6 carbon atoms in the electrolyte being denoted as S3, wherein 5% ≤ S3 ≤ 70%;
the positive electrode plate further comprises a positive electrode active layer coated on a surface of at least one side of the positive electrode current collector, the positive electrode active layer comprising a positive electrode active material; the positive electrode active material comprises a Ni element, with the mass percentage of the Ni element in the positive electrode active material being denoted as w, wherein $0.3 \leq S 3 / w \leq 1.5 .$

2. The secondary battery according to claim 1, wherein 15% ≤ S3 ≤ 50%;
and/or, the positive electrode active material is LiNiₓCo_{y}Mn_{z}MₖO₂, in which 0.3 ≤ x ≤ 0.9, preferably 0.5 ≤ x ≤ 0.8, 0 ≤ y ≤ 1, 0 ≤ z ≤ 1, 0 ≤ k ≤ 0.05, x+y+z+k=1, and M is selected from one or more of Fe, Mg, Cu, Zn, Al, Ti, Sn, B, Ga, Cr, Sr, V, and Zr;
and/or, the linear solvent having 5-6 carbon atoms comprises one or more of diethyl carbonate, ethyl propyl carbonate, propyl propionate, ethyl butyrate, methyl trimethylacetate, and ethyl isobutyrate;
and/or, 20% ≤ w ≤ 55%.

3. The secondary battery according to claim 1, wherein the solvent further comprises a cyclic carbonate comprising at least one of ethylene carbonate and propylene carbonate, with the content of ethylene carbonate being denoted as S1 and the content of propylene carbonate being denoted as S2, wherein
0.01% ≤ S1 ≤ 30%, and 0.01% ≤ S2 ≤ 30%;
and/or, 0.1 ≤ S1/S2 ≤ 10, preferably 0.15 ≤ S1/S2 ≤ 5;
and/or, 10% ≤ S1+S2 ≤ 40%, preferably 15% ≤ S1+S2 ≤ 35%.

4. The secondary battery according to any one of claims 1-3, wherein the electrolyte further comprises a first additive, with the mass percentage of the first additive in the electrolyte being denoted as S4, wherein 0.1% ≤ S4 ≤ 6%, preferably 0.5% ≤ S4 ≤ 5%; and the first additive comprises one or more of 1,3-propane sultone, prop-1-ene-1,3-sultone, ethylene sulfate, ethylene sulfite, and thiophene;
and/or, the electrolyte further comprises a second additive, with the mass percentage of the second additive in the electrolyte being denoted as S5, wherein 0.1% ≤ S5 ≤ 4%, preferably 0.5% ≤ S5 ≤ 3%; and the second additive comprises one or more of vinylene carbonate, vinyl ethylene carbonate, fluoroethylene carbonate, and difluoroethylene carbonate.

5. The secondary battery according to any one of claims 1-4, wherein the electrolyte further comprises a lithium salt comprising one or more of lithium hexafluorophosphate, lithium bis(fluorosulfonyl)imide, and lithium bis(trifluoromethanesulfonyl)imide, with the mass percentage of the lithium salt in the electrolyte being denoted as S6, wherein 8% ≤ S6 ≤ 20%, preferably 10% ≤ S6 ≤ 18%.

6. The secondary battery according to claim 5, wherein the separator comprises a base film and an adhesive layer, with the coverage rate of the adhesive layer on the separator being denoted as m, wherein 20% ≤ m ≤ 100%, preferably 0.05 ≤ S6/m ≤ 1;
and/or, the porosity of the separator is controlled within 30%-50%.

7. The secondary battery according to any one of claims 1-6, wherein the doping element in the positive electrode active material comprises an Al element, preferably Al and Ti, the doping amount of the doping elements in the positive electrode active material is 1% or less, preferably the doping amount of the Al element in the positive electrode active material is 500-3000 ppm;
and/or, the positive electrode active material is a single crystal material.

8. The secondary battery according to any one of claims 1-7, wherein the positive electrode active material has an average particle size of 3-7 µm and a particle size distribution of: 1≤ Dv10 ≤ 3, 4≤ Dv50 ≤6, and 8 ≤ Dv90 ≤ 15;
and/or, the thickness of the positive electrode active layer on one side of the positive electrode plate is h1 µm, wherein 55 ≤ h1 ≤ 75.

9. The secondary battery according to claim 8, wherein the negative electrode plate comprises a negative electrode current collector, and a negative electrode active layer coated on a surface of at least one side of the negative electrode current collector, the negative electrode active layer comprising a negative electrode active material;
the negative electrode active material has an average particle size of 4-8 µm and a particle size distribution of: 2≤ D10 ≤ 4, 4≤ D50 ≤8, and 9 ≤ D90 ≤ 15; and/or, the thickness of the negative electrode active layer on one side of the negative electrode plate is h2 µm, wherein 60 ≤ h2 ≤ 80;
preferably 1 ≤ h2/h1 ≤ 1.2.

10. An electric device, comprising a secondary battery according to any one of claims 1-9.
